# EUROPEAN PATENT APPLICATION

(11) **EP 3 153 970 A1**
(43) Date of publication of application: **12.04.2017**
(21) Application number: 15188496.2
(22) Date of filing: 06.10.2015
(51) Int. Cl.: G06F 11/07, G06F 11/36, B60W 50/02

(54) **A VEHICLE SAFETY ELECTRONIC CONTROL SYSTEM**

(71) Applicant: Autoliv Development AB, 447 83 Vårgårda (SE)
(72) Inventor: ROTA, Alina, Caransebes (RO); KOLLMER, Norbert, 85737 Ismaning (DE)
(74) Representative: Parry, Simon James

(57) **Abstract**

There is disclosed a vehicle safety electronic control system comprising a first microcontroller configured to process vehicle safety data, and a second microcontroller connected to the first microcontroller and configured to monitor the performance of the first microcontroller. The first microcontroller has a debug and trace architecture to which said second microcontroller is permanently connected via a trace connection.

## Description

The present invention relates to an electronic control system, and more particularly relates to a vehicle safety electronic control system.

Electronic safety systems are now very widely used in motor vehicles. Such safety systems may include, for example: blind spot monitoring systems; active cruise control systems; pre-safe braking systems; collision avoidance systems; lane departure prevention systems; and rear-collision mitigation systems.

The complex nature of modern vehicular safety systems places great importance on the performance and reliability of the electronic control systems which are required to provide and manage the safety systems. Such control systems typically include integrated hardware and software in order to host and run so-called Advanced Driver Assistance Systems (ADAS) algorithms.

Such systems are required to satisfy very stringent safety requirements such as the ISO 26262 Functional Safety for Road Vehicles standard, which defines a so-called Automotive Safety Integrity Level (ASIL) risk classification scheme. ASIL-D represents the highest integrity requirements under this standard, and is applicable to safety-related processing tasks.

A requirement of the functional safety standard is that the control system must be capable of identifying safety-relevant errors in its arithmetic, logical and memory units, which is only possible for an ASIL-D electronic control unit if a lockstep processor architecture is used. However, processors with a lockstep architecture of this type have a relatively low processing power which is insufficient to handle modern applications like ADAS with a set of suitable sensors such as Radar, Lidar and/or cameras. It has therefore been proposed to use two microcontrollers such that a first so-called "safety" microcontroller can handle important safety-related tasks and monitor the operation of a second so-called "performance" microcontroller which has a higher processing power and is thus configured to handle the main processing tasks of the system, under the supervision of the safety microcontroller.

In the type of arrangement described above, the safety microcontroller is usually configured to monitor the performance microcontroller via a high level software flow monitoring approach. In this type of arrangement the safety microcontroller will be able to diagnose problems in the performance microcontroller, providing the communication path between the two microcontrollers is healthy such that the performance microcontroller can communicate with the safety microcontroller. However, in the event that the performance microcontroller becomes unable to communicate its status or faults to the safety microcontroller, for example because a trap is entered, then the safety microcontroller will only be able to determine the failure mode entered (e.g. "failure to execute" mode) by the performance microcontroller in general terms, and will lose its ability to diagnose the fault more accurately or to fix the fault.

It is an object of the present invention to provide an improved vehicle safety electronic control system.

According to the present invention, there is provided a vehicle safety electronic control system comprising: a first microcontroller configured to process vehicle safety data; a second microcontroller connected to the first microcontroller and configured to monitor the performance of the first microcontroller; the system being characterised in that the first microcontroller has a debug and trace architecture to which said second microcontroller is permanently connected via a trace connection.

Preferably, said debug and trace architecture is an integral ("on-chip") feature of said first microcontroller.

Advantageously, said first microcontroller has a trace port to which said second microcontroller is connected.

Conveniently, said second controller has at least one general-purpose input/output which is connected to the trace port of the first microcontroller.

Alternatively, said second microcontroller may be connected to said debug and trace architecture via a DAP connection.

Preferably, said debug and trace architecture comprises a data buffer.

Advantageously, the second microcontroller is configured periodically to trace data on said first microcontroller, via said trace connection.

Conveniently, said second microcontroller is configured to trace exception register data on said first microcontroller via said trace connection.

Optionally, said second microcontroller is configured to detect core faults in said first microcontroller via said trace connection.

Said second microcontroller may be configured to control said first microcontroller via said trace connection.

Conveniently, said first and second microcontrollers are interconnected via a communication interface provided in addition to said trace connection.

Optionally, said communication interface is provided in the form of a Serial Peripheral Interface bus.

Preferably, the first microcontroller has a higher processing power the second microcontroller.

Advantageously, the control system may be provided in the form of an integrated electronic control unit.

According to a second aspect of the present invention, there is provided a motor vehicle electronic safety system comprising a control system according to the first aspect.

So that the invention may be more readily understood, and so that further features thereof may be appreciated, embodiments of the invention will now be described by way of example with reference to the accompanying drawings in which:
Figure 1 is a schematic illustration showing an overview of a typical motor vehicle safety system, which may include an electronic control system in accordance with the present invention; and
Figure 2 is a schematic illustration showing an overview the principal hardware elements of an electronic control system in accordance with the present invention.

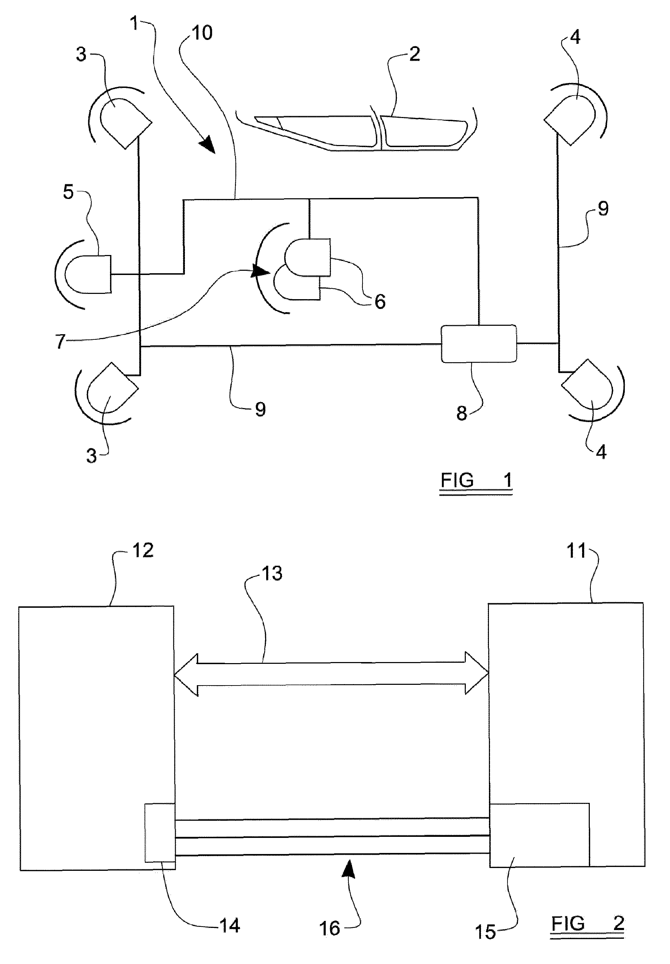

Turning now to consider figure 1 in more detail, there is illustrated a schematic representation of an exemplary electronic safety system 1 installed in a motor vehicle 2 (only one side panel of which is denoted in figure 1 to indicate the vehicle's orientation). The safety system 1 comprises a number of different types of sensor mounted at appropriate positions on the motor vehicle 2. In particular, the system 1 illustrated includes: a pair of divergent and outwardly directed mid-range radar ("MRR") sensors 3 mounted at respective front corners of the vehicle 2, a similar pair of divergent and outwardly directed multi-role radar sensors 4 mounted at respective rear corners of the vehicle, a forwardly directed long-range radar ("LRR") sensor 5 mounted centrally at the front of the vehicle 2, and a pair of generally forwardly directed optical sensors 6 forming part of a stereo vision system ("SVS") 7 which may be mounted, for example, in the region of the upper edge of the vehicle's windscreen. The various sensors 3-6 are operatively connected to a central electronic control system which is typically provided in the form of an integrated electronic control unit 8 mounted at a convenient location within the vehicle. In the particular arrangement illustrated, the front and rear MRR sensors 3, 4 are connected to the central control unit 8 via a conventional Controller Area Network ("CAN") bus 9, and the LRR sensor 5 and the sensors of the SVS 7 are connected to the central control unit 8 via a faster FlexRay serial bus 9, also of a type known *per se.*

Collectively, and under the control of the control unit 8, the various sensors 3-6 can be used to provide a variety of different types of driver assistance systems such as, for example: blind spot monitoring; adaptive cruise control; collision prevention assist; lane departure protection; and rear collision mitigation. Accordingly, the control unit 8 will be configured to run appropriate software algorithms for each such driver system.

Figure 2 illustrates schematically the principal hardware elements of a control system in accordance with the present invention, which it will be appreciated could be provided in the form of the integrated control unit 8 illustrated in figure 1. The control system comprises a first (slave) microcontroller 11, and a second (master) microcontroller 12. The master microcontroller 12 may be configured to run safety software to live up to the strictest (ASIL-D) safety integrity requirements of the system, which require the identification of processing errors, whilst the slave microcontroller 11 has a higher processing power and is configured to handle the main processing tasks of the system and some safety-related processing tasks in order to relieve the master microcontroller 12. Because the master microcontroller 12 is configured to satisfy the strict safety integrity requirements of the system it can be considered to represent a so-called "safety microcontroller". Similarly, because the slave microcontroller 11 is configured to have a higher processing power than the master microcontroller, it can be considered to represent a so-called "performance microcontroller".

It is envisaged that in some embodiments of the present invention the slave microcontroller 11 may be configured to perform at 3000 DMIPS, whilst the master microcontroller 12 may be configured to perform at 500 DMIPS.

The master microcontroller 12 may have a lockstep architecture comprising a plurality of processing cores, in a manner known *per se.* It is proposed that the slave microcontroller 11 will not have a lockstep architecture, but it may nevertheless also comprise a plurality of processing cores. The two microcontrollers 11, 12 are operatively connected by a communication interface (illustrated schematically at 13 in figure 2), such as a conventional synchronous serial communication interface in the form of a Serial Peripheral Interface ("SPI") bus. The microcontrollers 11, 12 will thus be configured to operate synchronously. In preferred embodiments, it is envisaged that the SPI bus 13 may be provided in the form of a quad SPI connection having four channels operable in a simplex mode to establish the required bandwidth between the two microcontrollers.

Accordingly, the master microcontroller 12 is configured to monitor and control the slave microcontroller 11. The master microcontroller 12 may be configured for direct connection to the vehicle buses, which may include the CAN and FlexRay buses 9, 10 illustrated in figure 1, and an Ethernet bus.

The slave microcontroller 11 is specifically configured such that it has a so-called "debug and trace" architecture and macro, provided as an integral feature so the microcontroller. It is presently proposed that in favoured embodiments of the present invention, the slave microcontroller 11 may be selected to be one produced by ARM Holdings Pic, and which incorporates that company's proprietary CoreSight™ debug and trace architecture and macro.

As will be appreciated by those of skill in the art of microcontrollers and computer system development, a debug and trace architecture such as the CoreSight™ system is typically used by developers only during the development phase of new systems. This typically involves the connection of external debugging or emulator units to the debug and trace architecture of a microcontroller in order to obtain information regarding the performance of the microcontroller during development, and to debug the software thereon if necessary. Where the proposals of the present invention differ from this known use of such architectures, is that the present invention involves using the debug and trace architecture of the slave microcontroller in real-time during normal operation of the microcontroller in a complete motor vehicle electronic safety system 1, as will be described in more detail below.

The master microcontroller 12 includes a plurality of generally conventional General Purpose Inputs and Outputs (GPIOs) 14, and the debug and trace architecture of the slave microcontroller 11 includes a trace port 15, of a type known *per se.* In conventional use of a microcontroller debug and trace architecture, the microcontroller's trace port would be connected to external development equipment such as a debugger or an emulator as indicated above. However, in the proposal of the present invention, the trace port 15 of the slave microcontroller 11 is used to interconnect the slave and master microcontrollers 11, 12 via a permanent trace connection 16 which is provided in addition to the above-mentioned synchronous serial communication interface 13. As illustrated in figure 2, the trace connection 16 provides direct connection between the GPIOs 14 of the master microcontroller 12 and the trace port 15 of the slave microcontroller 11.

General characteristics of the debug and trace architecture and macro provided on the slave microcontroller 11, which are exploited by the present invention include: the fact that it does not interfere significantly (and indeed actually interfere only very minimally) with the normal operation of a microcontroller 11; it will have inherent access to registers (including exception registers), system mode registers and the program counter of the microcontroller 11; and it will incorporate replicators and allow simultaneous debugging and tracing of errors detected in the microcontroller 11.

The control system 8 of the present invention operates such that the master microcontroller 12 effectively functions as an on-board debugging and tracing device to capture information to be used for debugging errors on the slave microcontroller 11 in real-time during the normal operation of the control system 8 within a motor vehicle 2, without disturbing the normal running of software on the slave microcontroller 11.

The debug and trace architecture and macro of the slave microcontroller 11, and its connection to the master microcontroller 12 via the trace connection 16, is used to periodically check the software being processed within the slave microcontroller 11. The resulting data is sent to the master microcontroller 12 via the trace connection 16 for real-time evaluation whereupon, if necessary, the master microcontroller 12 can control the slave microcontroller 11 in the sense of debugging any errors detected. As will be appreciated by those of skill in the art, the debug and trace architecture of the slave microcontroller 11 may include a data buffer for temporary storage of data pending the next periodic trace communication with the master microcontroller 12. The master microcontroller 12 is configured to perform cyclic triggers to trace critical data from the slave microcontroller 11 via the trace connection 16.

It is envisaged that the particular data which will be traced from the slave microcontroller 11 by the master microcontroller 12, and the particular connections required, will vary depending on the particular configuration of the vehicle safety system 1. By way of non-limiting examples, envisaged possibilities include:
- Read-outs from the slave microcontroller's exception registers, such that the master microcontroller 12 may detect exceptions even without the need for the slave microcontroller 11 to be able to execute communication via the higher level communication interface 13
- Combination of the trace connection 16 with statically defined memory mapping to detect issues in the program flow on the slave microcontroller 11 such as prohibited or unexpected access to specific memory areas
- Combination of the trace connection 16 with the statically defined program access ranges to detect any jump or call in an unexpected area, by monitoring the slave microcontroller's program counter
- Using the trace connection 16 to verify cyclically the value of critical configuration and control registers of the slave microcontroller
- Using the trace connection 16 to detect core bus faults, and Advanced Microcontroller Bus Architecture ("AMBA") faults in the slave microcontroller 11 which are not covered by any built-in safety tests within the slave microcontroller 11.

The arrangements of the present invention described herein, and in particular the hardware trace connection 16 provided between the slave and master microcontrollers 11, 12 allow a variety of safety-related verifications and tests to be performed on the slave microcontroller 11 by the master microcontroller 12 without adversely affecting the performance of the slave microcontroller 11. Also, the system permits precise diagnosis and correction of faults which could result in failure of the slave microcontroller 11, which may not be possible in conventional approaches where, due to lack of proper communication between the two microcontrollers, only the general nature of the failure mode can be detected by the master microcontroller 11.

Another advantage of the present proposal is that it very significantly reduces the time taken up by the slave microprocessor 11 in monitoring its own faults. In many implementations of the present invention, this time can actually be reduced to close to zero.

Whilst the invention has been described above with specific reference to particular embodiments, it is to be appreciated that various changes or modifications can be made without departing from the scope of the claimed invention. For example, whilst the above-described embodiments are configured such that the trace connection 16 between the master microcontroller 12 and the debug and trace architecture of the slave microcontroller 11 is made via a trace port 15 provided on the slave microcontroller 11, it is possible that particular configurations or implementations of the debug and trace architecture could make it preferable, instead, to use a Directory Access Protocol (DAP) connection.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A vehicle safety electronic control system (8) comprising: a first microcontroller configured to process vehicle safety data; a second microcontroller connected to the first microcontroller and configured to monitor the performance of the first microcontroller; the system being **characterised in that** the first microcontroller has a debug and trace architecture to which said second microcontroller is permanently connected via a trace connection.

2. A control system according to claim 1, wherein said debug and trace architecture is an integral feature of said first microcontroller.

3. A control system according to claim 1 or claim 2, wherein said first microcontroller has a trace port to which said second microcontroller is connected.

4. A control system according to claim 3, wherein said second microcontroller has at least one general-purpose input/output which is connected to the trace port of the first microcontroller.

5. A control system according to claim 1 or claim 2, wherein said second microcontroller is connected to said debug and trace architecture via a DAP connection.

6. A control system according to any preceding claim, wherein said debug and trace architecture comprises a data buffer.

7. A control system according to any preceding claim, wherein the second microcontroller is configured periodically to trace data on said first microcontroller, via said trace connection.

8. A control system according to claim 7, wherein said second microcontroller is configured to trace exception register data on said first microcontroller via said trace connection.

9. A control system according to claim 7 or claim 8, wherein said second microcontroller is configured to detect core faults in said first microcontroller via said trace connection.

10. A control system according to any preceding claim, wherein said second microcontroller is configured to control said first microcontroller via said trace connection.

11. A control system according to any preceding claim, wherein said first (11) and second (12) microcontrollers are interconnected via a communication interface (13) provided in addition to said trace connection.

12. A control system according to claim 8, wherein said communication interface (13) is provided in the form of a Serial Peripheral Interface bus.

13. A control system according to any preceding claim, wherein the first microcontroller has a higher processing power the second microcontroller.

14. A control system according to any preceding claim provided in the form of an integrated electronic control unit.

15. A motor vehicle electronic safety system (1) comprising a control system (8) according to any preceding claim.
